# EUROPÄISCHE PATENTSCHRIFT

(11) **EP 0 346 783 B1**
(45) Veröffentlichungstag und Bekanntmachung des Hinweises auf die Patenterteilung: **15.12.1993**
(21) Anmeldenummer: 89110538.9
(22) Anmeldetag: 10.06.1989
(51) Int. Cl.: H04L 25/49

(54) **Verfahren und Vorrichtung zum Ubertragen von digitalen Telemetriezeichen über eine digitale Datenleitung**
Method and device for transmitting digital telemetry signals in a digital data flow
Procédé et dispositif pour transmettre des signaux de télémétrie dans un flux de données numériques

(30) Priorität: 14.06.1988 CH 2268/88
(43) Veröffentlichungstag der Anmeldung: 20.12.1989
(73) Patentinhaber: Ascom Ericsson Transmission AG, CH-3000 Bern 14 (CH)
(72) Erfinder: Studer, Christian, DH-3048 Worblaufen (CH); Carrick, Angus, CH-3097 Liebefeld (CH)
(74) Vertreter: Schwerdtel, Eberhard, Dr.

(56) Entgegenhaltungen:
- EP-A- 0 176 015
- FR-A- 2 529 415
- PATENT ABSTRACTS OF JAPAN, Band 9, Nr. 185 (E-332)[1908], 31. Juli 1985, Seite 141 E 332;& JP-A-60 55 760
- SIEMENS/TELCOM REPORT, Band 10, März 1987, Special "Multiplex- und Leitungseinrichtungen", Seiten 104-108, Erlangen, DE; J. IRNSPERGER et al.:"Universelles Lichtwellenleiter-Übertragungssystem für 2,8 und 34 Mbit/s"

## Beschreibung

Die Erfindung betrifft ein Verfahren und eine Vorrichtung zum Uebertragen von digitalen Telemetriezeichen über eine digitale Datenleitung entsprechend dem Oberbegriff der unabhängigen Ansprüche.

Unter Telemetrie wird im engeren Sinne die Uebertragung von Messwerten über elektrische Leitungen verstanden zum Zwecke einer Fernablesung von Messinstrumenten. Hier soll unter Telemetrie allgemeiner die relativ langsame Uebertragung digitaler Signale für Zwecke der Steuerung, der Ueberwachung usw. verstanden werden, wobei die Uebertragung über eine relativ schnellere Uebertragungsstrecke erfolgt, die primär für Nutzsignale anderer Art vorgesehen ist.

Eine erste bekannte Methode der Uebertragung von Telemetriesignalen über eine digitale Uebertragungsleitung besteht darin, dass die an sich konstanten Amplituden der digitalen Nutzsignale für die Telemetriesignale amplitudenmoduliert werden. Die hierbei gegebene Vermischung von Digital- und Analogtechnik ist aufwendig und störanfällig.

Aus der Schrift FR-A-2 529 415 ist eine Methode der Uebertragung von Telemetriesignalen bekannt, die rein digital arbeitet. Bei dieser Methode werden die primären Daten mit Hilfe des dreiwertigen HDB3- bzw. des modifizierten CMI-Codes (MCMI) übertragen. Bei letzterem gibt es erlaubte Blöcke 00, 11 und 01 sowie verbotene Blöcke 10, die primär zur Fehler- erkennung dienen. Die Methode basiert nun darauf, dass für die Uebertragung der Telemetriesignale jeweils ein erlaubter Block 01 durch einen verbotenen Block 10 ersetzt wird, was auf der Empfangsseite erkennbar und korrigierbar ist.

Der Nachteil dieser Methode besteht darin, dass die auswechselbaren Blöcke 01 nicht regelmässig im Fluss der Uebertragungsstrecke auftreten und daher für die zu übertragenden Telemetriesignale keine volle Transparenz besteht. Weiter ist die Uebertragung der Methode auf eine Uebetragungsstrecke, auf der der reine CMI-Code verwendet wird, nicht möglich, da beim CMI-Code sehr lange Sequenzen ohne erlaubte Blöcke 01 auftreten können.

Die Aufgabe der Erfindung besteht darin, eine Telemetrie-Uebertragung über eine Datenleitung aufzuzeigen, auf der der reine CMI-Code verwendet wird. Hierbei soll volle Regenerierbarkeit des primären Datensignals und möglichst verzögerungsfreie, jederzeitige Uebertragung der Telemetriesignale möglich sein. Die hierzu erforderliche Anordnung soll einfach sein und bei sehr hoher Uebertragungsrate, insbesondere bei 140 Mbit/s arbeiten.

Die Lösung dieser Aufgabe wird durch den kennzeichnenden Teil der unabhängigen Ansprüche angegeben. Die abhängigen Ansprüche geben Ausgestaltungen der Erfindung an.

Die erfindungsgemässe Methode der Telemetrie-Uebertragung ist einfach und erfüllt die aufgestellen Forderungen. Der schaltungstechnische Aufwand ist sehr gering und auch bei den geforderten hohen Uebertragungsraten gut realisierbar.

Im folgenden wird die Erfindung anhand von zwölf Figuren beispielsweise näher beschrieben. Es zeigen:
Fig. 1 - grundsätzliches Blockschaltbild einer digitalen Uebertragungsstrecke mit zusätzlicher Telemetrieübertragung
Fig. 2 - Beispiele eines Datensignals, in das nach verschiedenen Regeln Telemetrieblöcke eingefügt sind
Fig. 3 Beispiele zur Uebertragung von verschiedenen Telemetriesignalen
Fig. 4 - Blockschaltbild einer ersten Telemetrie-Einfügeschaltung
Fig. 5 - Blockschaltbild einer zweiten Telemetrie-Einfügeschaltung
Fig. 6 - der zweiten Telemetrie-Einfügeschaltung zugeordnete Logiktabelle
Fig. 7 - Blockschaltbild einer dritten Telemetrie-Einfügeschaltung
Fig. 8 - der dritten Telemetrie-Einfügeschaltung zugeordnete Logiktabelle
Fig. 9 - Blockschaltbild einer Telemetrieerkennungs- und Datensignalregenerator-Schaltung
Fig. 10 bis 12 - Logiktabellen, die der Schaltung entsprechend Fig. 9 zugeordnet sind.

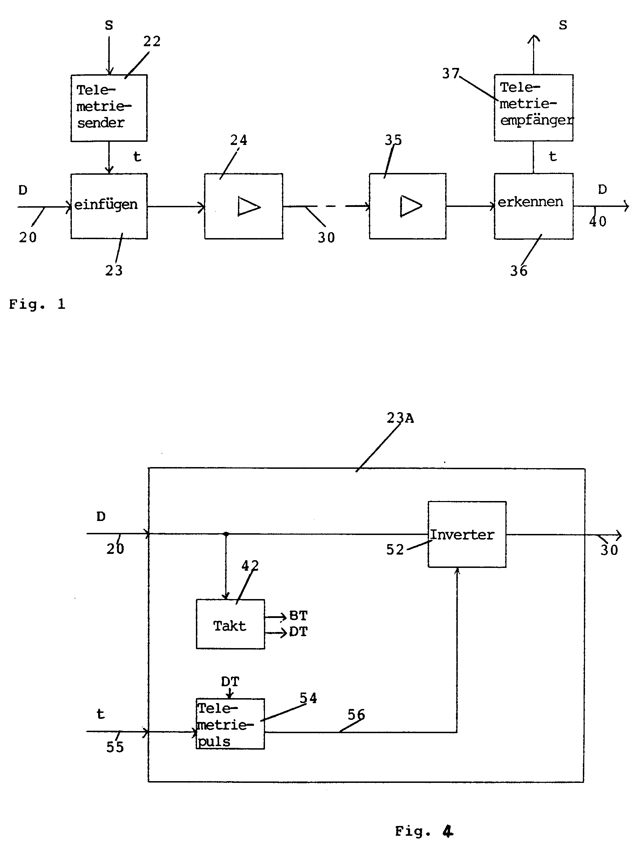

Fig. 1 zeigt ein grundsätzliches Blockschaltbild einer Uebertragungsstrecke für primäre Datensignale D und Telemetriesignale S. Die Strecke umfasst eine ankommende Datenleitung 20, einen Telemetriesender 22, eine Telemetrie-Einfügeschaltung 23, einen Ausgangsverstärker 24, eine gerichtete, digitale Uebertragungsleitung 30, einen Eingangsverstärker 35, eine Telemetrieerkennungs- und Datensignalregenerator-Schaltung 36, an die die abgehende Datenleitung 40 angeschlossen ist sowie einen Telemetrieempfänger 37.

Die ankommende 20 und die abgehende Leitung 40 bilden im allgemeinen kurze Verbindungen zu anderen Elektronikeinrichtungen. Dagegen ist die Uebertragungsleitung 30 bevorzugt als optische bzw. Glasfaserleitung erheblicher Länge ausgebildet.

Der für die primäre Datenübertragung verwendete Code ist der CMI-Code, der durch die internationale Norm CCITT, Fascicle III. 3 - Rec. G. 703 für eine Frequenz von ca. 140 Mbit/s genormt ist. (CMI coded mark inversion).

Der CMI-Code überträgt die Bits des primären Datensignals D in Form erlaubter Blöcke E aus jeweils zwei Bits nach folgender Zuordnungsregel

| primäres Datensignal | CMI-Code |
|---|---|
| 0 | 01 |
| 1 | 00 und 11 abwechselnd |

Beim CMI-Code gibt es damit drei Sorten erlaubter Blöcke E, nämlich 01, 00 und 11. Blöcke 10 sind dagegen verboten (verbotener Block V) und zeigen primär auf der Empfangsseite einer Uebertragungsstrecke Uebertragungsfehler an. Die Vorschrift, dass die Blöcke mit zwei gleichen Bits (00,11) codegemäss jeweils abwechseln, wird im folgenden als Alternierungsregel bezeichnet.

Das Telemetriesignal S weist eine Taktfrequenz f_{S} auf, die klein gegenüber der Taktfrequenz f_{D} des Datensignals D ist, z.B. tausend mal kleiner. Mit dieser geringen Taktfrequenz f_{S} wird nun jeweils ein Telemetriezeichen t als kleinste Einheit des Telemetriesignals S übertragen. Hierzu wird in der Telemetrie-Einfügeschaltung 23 unabhängig vom jeweiligen Zeitpunkt und unabhängig von der jeweiligen Sorte der erlaubten Blöcke E jeweils ein erlaubter Block E durch einen Telemetrieblock T bzw. mehrere erlaubte Blöcke E durch eine entsprechende Anzahl von Telemetrieblöcken T ersetzt.

In der Telemetrieerkennungs- und Datensignalregenerator-Schaltung 36 werden die über die Uebertragungsleitung 30 ankommenden Telemetrieblöcke T erkannt. Die Schaltung 36 gibt für jeden Telemetrieblock T ein Signal an den Telemetrieempfänger 37 ab, der hieraus das Telemetriesignal S bildet und über seinem Ausgang abgibt. Der Telemetrieempfänger 37 unterscheidet weiter Telemetrieblöcke T und Fehlerblöcke, die aufgrund von Uebertragungsfehlern regelwidrig auftreten. Hierauf wird an dieser Stelle jedoch nicht näher eingegangen.

Die Telemetrieerkennungs- und Datensignalregenerator-Schaltung 36 rückersetzt weiter jeden Telemetrieblock T durch den jeweils "richtigen" erlaubten Block E und bringt damit das Datensignal wieder in Ordnung. Auf diese Weise ist somit zu jeder beliebigen Zeit zusätzlich zum jeweiligen Datensignal D ein beliebiges Telemetriesignal S über die Leitung 30 übertragbar. Dies bedeutet, dass sowohl für das Datensignal D als auch für das Telemetriesignal S volle Transparenz der Uebertragungsstrecke besteht.

Für das Ersetzen der erlaubten Blöcke E durch Telemetrieblöcke T gelten folgende allgemeine Zuordnungsregeln:
- Jeder Sorte der erlaubten Blöcke E ist eine spezielle Sorte von Telemetrieblöcken T zugeordnet.
- Gewisse Sorten von Telemetrieblöcken T stimmen mit gewissen Sorten von erlaubten Blöcken E überein.
- Jeder Telemetrieblock T, der einen erlaubten Block E ersetzt, verletzt eine Coderegel des CMI-Codes oder ist ein verbotener Block V.

Es gibt nun mehrere Möglichkeiten, diese allgemeinen Zuordnungsregeln speziell zu realisieren.

Möglichkeit A: Jeder erlaubte Block E wird durch einen Telemetrieblock T ersetzt, dessen Bits gegenüber den Bits des ersetzten Blocks E beide invertiert sind. Dies bedeutet, dass die E-Blöcke 01, 00, 11 durch T-Blöcke 10, 11 bzw. 00 ersetzt werden. Es erfolgt keine weitere Massnahme.

Möglichkeit B: Jeder erlaubte Block E wird durch einen Telemetrieblock T ersetzt, dessen Bits gegenüber den Bits des ersetzten Blocks E beide invertiert sind. Dies bedeutet, dass die E-Blöcke 01, 00, 11 durch T-Blöcke 10, 11 bzw. 00 ersetzt werden. Wenn ein Block mit zwei gleichen Bits (00, 11) ersetzt wird, dann werden als weitere Massnahme alle nachfolgenden Blöcke mit zwei gleichen Bits (00,11) bezüglich ihrer Bits invertiert.

Möglichkeit C: Erlaubte Blöcke E mit zwei gleichen Bits (00, 11) werden durch einen verbotenen Block V (10) ersetzt. Erlaubte Blöcke E mit zwei ungleichen Bits (01) werden durch einen Block mit zwei gleichen Bits (00, 11) ersetzt, und zwar so, dass die Alternierungsregel des CMI-Codes verletzt wird.

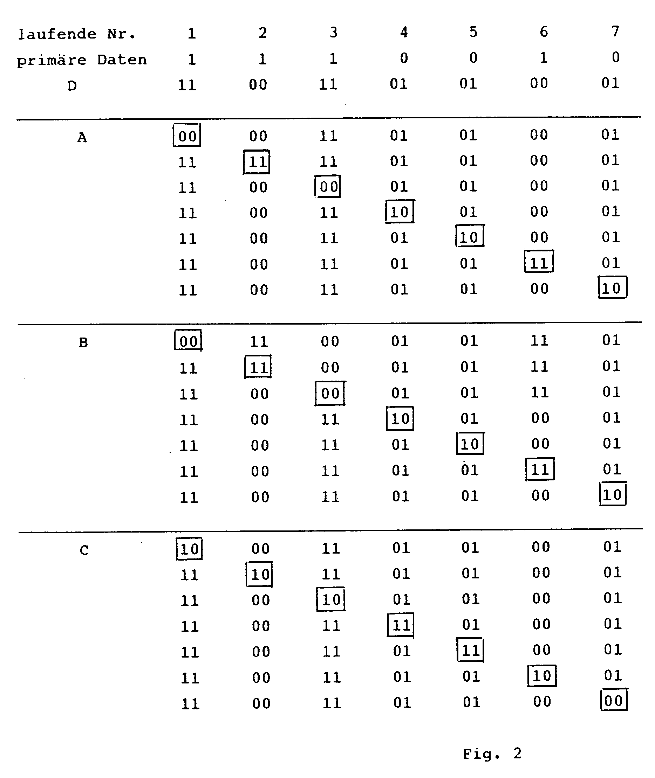

Zur Erläuterung dieser drei Möglichkeiten A, B, C zeigt Fig. 2 ein Beispiel eines Datensignals D, in das zu verschiedenen Zeitpunkten je ein Telemetrieblock T eingefügt ist. In der obersten Zeile ist die laufende Nummer der aufeinanderfolgenden Blöcke des Datensignals D (dritte Zeile) bzw. das diesen Blöcken zugeordneten primäre Datensignal (zweite Zeile) angegeben. In den folgenden Zeilen wird jeweils das Datensignal D wiederholt, wobei fortschreitend jeweils ein anderer E-Block durch einen Telemetrieblock T zuerst entsprechend der Möglichkeit A und dann entsprechend den Möglichkeiten B und C ersetzt ist. So ist in Zeile A1 der erste Block ersetzt, in Zeile A2 der zweite usw. Entsprechendes gilt für die Zeilen B und C.

Beim Beispiel A entsprechend der genannten Möglichkeit A wird jeder Telemetrieblock T aus den zu ersetzenden erlaubten Blöcken E durch Invertieren beider Bits gewonnen. Dies ist ein sehr einfacher Vorgang, der auf der Sendeseite mit Hilfe eines Exklusiv-ODER-Tores (EXOR) problemlos durchführbar ist.

Auf der Empfängerseite ergibt sich bei der Möglichkeit A jedoch eine Komplizierung für Telemetrieblöcke T mit zwei gleichen Bits (00, 11). Bei diesen tritt nämlich jeweils eine zweite Verletzung der Alternierungsregel des CMI-Codes auf, sobald der jeweils nächste, nicht invertierte E-Block mit zwei gleichen Bits auftritt. Dies kann unmittelbar nachfolgend auf den jeweiligen Telemetrieblock T geschehen oder auch erheblich verzögert, was störend ist.

Beim Beispiel B entsprechend der Möglichkeit B werden die T-Blöcke ebenfalls aus den E-Blöcken durch Invertieren der Bits gewonnen. Weiter ist jedoch eine Logik nötig, die E-Blöcke mit zwei gleichen Bits (00, 11) von E-Blöcken mit zwei ungleichen Bits (01) unterscheidet, und, sofern ein Block mit gleichen Bits (00, 11) invertiert wird, alle nachfolgenden Blöcke mit zwei gleichen Bits (00, 11) ebenfalls invertiert. Dies hat den Vorteil, dass hierdurch das beschriebene Auftreten der jeweils zweiten Codeverletzung der Alternierungsregel des CMI-Codes verhindert wird.

Beim Beispiel C entsprechend der dritten Möglichkeit C tritt ebenfalls jeweils nur eine einzige Codeverletzung auf, sei es durch einen einzigen verbotenen Block V oder durch eine einzige Verletzung der Alternierungsregel. Auch hier entfällt somit die jeweils zweite Codeverletzung nach einem Telemetrieblock T.

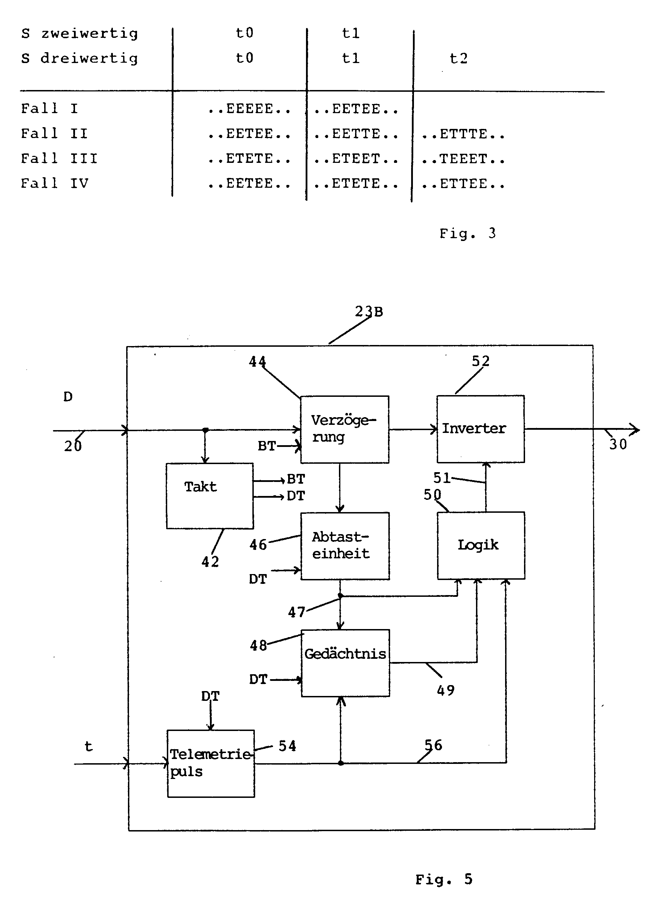

Da jederzeit jeder beliebige Block E des Datensignals D zur Uebertragung eines Telemetriezeichens t ersetzbar ist, gibt es für die Uebertragung eines Telemetriesignals S fast unbeschränkte Möglichkeiten. Fig. 3 zeigt hierzu Beispiele. Im Fall I wird von einem zweiwertigen Telemetriesignal S mit den Telemetriezeichen t0 und t1 entsprechend den logischen Pegeln 0 und 1 jeweils - wie bisher stillschweigend angenommen - nur das Zeichen t1 als Telemetrieblock T übertragen. Das Zeichen t0 wird nicht explizit übertragen, sondern nur implizit aufgrund des Zeittaktes des Telemetriesignals S. Dies bedeutet, dass im Fluss der erlaubten Blöcke E der Datensignale D das Telemetriezeichen t0 primär nicht erkennbar ist und das Telemetriezeichen t1 durch einen einzigen Telemetrieblock T dargestellt ist.

Weitere Möglichkeiten zur Uebertragung von zwei oder drei unterschiedlichen Telemetriezeichen t₀, t₁, t₂ bestehen z.B. darin, dass entsprechend Fall II jeweils zugeordnet ein, zwei oder drei Telemetrieblöcke T übertragen werden, oder dass entsprechend Fall III jeweils zwei Telemetrieblöcke T übertragen werden, jedoch mit zugeordnet unterschiedlichem Zeitabstand, d.h. einer unterschiedlichen Zahl dazwischen liegender erlaubter Blöcke E. Eine weitere Möglichkeit Fall IV besteht z.B. darin, dass drei Blöcke E und T gemeinsam als Codewort verstanden werden.

Im folgenden werden nun anhand weiterer Figuren detaillierte Schaltungsanordnungen der Telemetrie-Einfügeschaltung 23 sowie der Telemetrieerkennungs- und Datensignalregenerator-Schaltung 36 beschrieben, die den geschilderten Möglichkeit A, B und C des allgemeinen Prinzips zugeordnet sind. Die Möglichkeit C weist gegenüber den anderen Möglichkeiten bezüglich ihres Verhaltens bei Uebertragungsfehlern einige Vorteile auf und wird daher bevorzugt. Andererseits erlaubt die Möglichkeit B eine sehr einfache Realisierung, wenn das Datensignal D nicht in CMI-codierter Form anliegt bzw. abgegeben werden soll.

Fig. 4 zeigt das Blockschaltbild einer ersten Telemetrie-Einfügeschaltung 23A, die der genannten Möglichkeit A entspricht. Die Schaltung 23A umfasst eine Taktableiteeinheit 42, eine Invertereinheit 52 und eine Telemetriepuls-Einheit 54.

Die Blöcke E des Datensignals D erreichen die Telemetrie-Einfügeschaltung 23 über die Leitung 20, die Telemetriezeichen t über den Eingang 55. Die Taktableiteeinheit 42 bildet einen an sich bekannten Funktionsblock, der den Bittakt BT und Blocktakt DT des Datensignals D regeneriert und über seine Ausgänge den anderen Funktionseinheiten zur Verfügung stellt.

Die Telemetriepulseinheit 54 gibt jeweils, wenn ein Telemetriezeichen t ausgesendet werden soll, einen Telemetriepuls auf ihren Ausgang 56 ab, der mit einem beliebigen Block des Datensignals D synchronisiert ist. Die Invertereinheit 52 invertiert hierauf die beiden Bits des jeweiligen Blocks E des Datensignals D und sendet das so modifizierte Datensignal D auf die Uebertragungsleitung 30 aus.

Fig. 5 zeigt das Blockschaltbild einer zweiten Telemetrie-Einfügeschaltung 23B, die der genannten Möglichkeit B entspricht. Die Schaltung 23B umfasst gleich wie die Schaltung 23A von Fig. 3 eine Taktableiteeinheit 42, eine Invertereinheit 52 und eine Telemetriepuls-Einheit 54. Hierzu kommen weiter eine Verzögerungseinheit 44, eine Abtasteinheit 46, eine Gedächtniseinheit 48 und eine Logikeinheit 50.

Die Verzögerungseinheit 44 verzögert das über die Leitung 20 ankommende Datensignal D bitweise um eine Blocklänge und gibt das verzögerte Datensignal D weiter an die Invertereinheit 52. Die Abtasteinheit 46 tastet phasengerecht jeden in der Verzögerungseinheit 44 befindlichen Block E des Datensignals D ab. Das jeweilige Abtastergebnis wird der Gedächtniseinheit 48 und der Logikeinheit 50 über die Verbindung 47 mitgeteilt.

Die Logikeinheit 50 erhält somit über die Verbindung 47 für jeden Block E Information über dessen Sorte. Sie erhält weiter über die Verbindung 49 Information von der Gedächtniseinheit 48 über deren momentanen Inhalt. Und sie erhält schliesslich über die Verbindung 56 von der Telemetriepulseinheit 54 die Mitteilung, ob der jeweilige erlaubte Block E als Telemetrieblock T auf die Uebertragungsleitung 30 ausgesandt werden soll oder nicht.

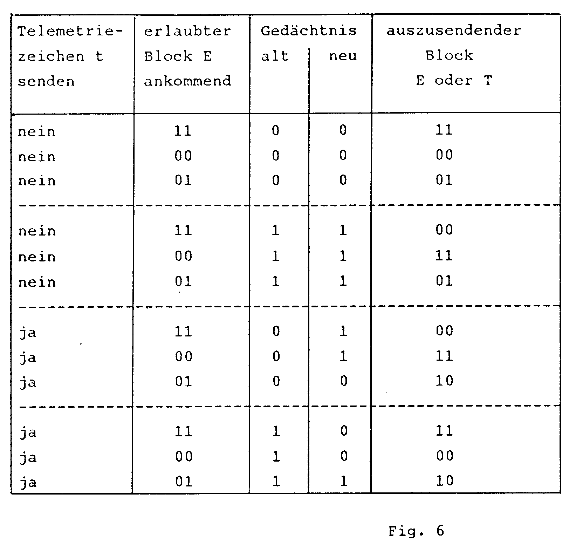

Die Logikeinheit 50 arbeitet nach der in Fig. 6 angegebenen Logiktabelle und steuert die Invertereinheit 52. Sobald ein Telemetrieblock T gesendet werden soll, bereitet dies die Telemetriepulseinheit 54 vor und gibt phasengerecht einen Telemetriepuls an die Logikeinheit 50 ab. Diese invertiert hierdurch den jeweiligen Block E in der Invertereinheit 52 zu einem Telemetrieblock T. War der genannte E-Block ein Block mit zwei ungleichen Bits (01), so ist damit der Vorgang beendet. War es jedoch ein Block E mit zwei gleichen Bits (00, 11), so werden anschliessend alle nachfolgenden erlaubten Blöcke E mit zwei gleichen Bits ebenfalls invertiert. (Dies beeinflusst den Informationsgehalt des Datensignals D jedoch nicht.) Das Wissen darüber, ob nachfolgend an einen Telemetrieblock T jeweils invertiert werden muss oder nicht, ist in der Gedächtniseinheit 48 enthalten und wird dauernd über die Verbindung 47 aktualisiert.

Das genannte Invertieren aller nachfolgenden erlaubten Blöcke E dauert so lange, bis ein nächstes Telemetriezeichen t durch Invertieren eines E-Blocks mit zwei gleichen Bits (00, 11) übertragen wird. Ist dies der Fall, dann erfolgt eine insgesamt doppelte Invertierung, was einer Nichtinvertierung entspricht. Dies bedeutet allgemein, dass vor einem auszusendenden, ungeradzahligen (n = 1, 3, 5, 7,...) bzw. nach einem ausgesandten geradzahligen (n = 2, 4, 6...) Telemetriezeichen t mit zwei gleichen Bits alle Blöcke 00 und 11 des Datensignals D nichtinvertiert über die Uebertragungsleitung 30 gesendet werden. Dagegen werden nach einem ungeradzahligen Telemetriezeichen t oder vor einem geradzahligen Telemetriezeichen t mit zwei gleichen Bits alle Blöcke 00 und 11 des Datensignals D grundsätzlich invertiert ausgesendet.

Die Logiktabelle von Fig. 6 gibt in der ersten Spalte an, ob ein Telemetriezeichen t gesendet werden soll oder nicht. Die zweite Spalte zeigt den jeweils über die Leitung 20 ankommenden erlaubten Block E des Datensignals D. Die dritte Spalte gibt den Inhalt der Gedächtniseinheit 48 an und die vierte Spalte die auf die Uebertragungsleitung 30 ausgesandten Blocksorten. In der Gedächtniseinheit 48 bedeutet 0 den Zustand vor einem auszusendenden ungeradzahligem Telemetriezeichen mit zwei gleichen Bits. 1 bedeutet dagegen den Zustand vor einem geradzahligen Telemetriezeichen mit zwei gleichen Bits.

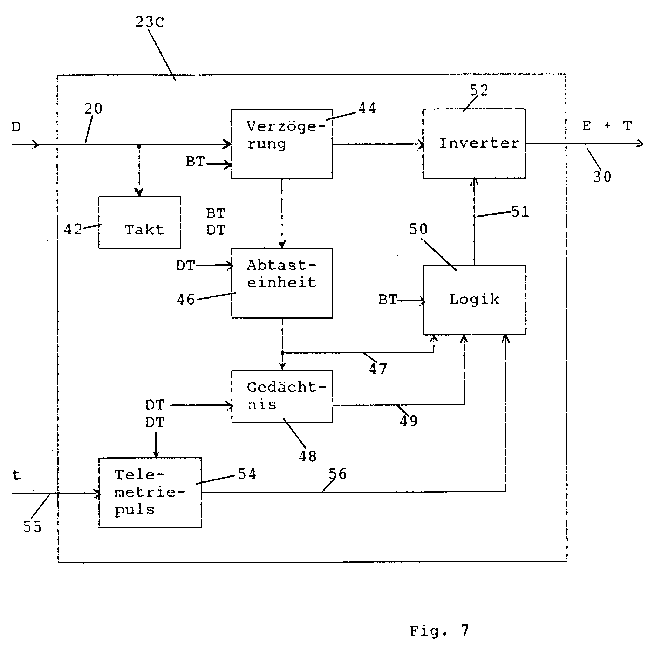

Fig. 7 zeigt das Blockschaltbild einer dritten Telemetrie-Einfügeschaltung 23C, die der genannten Möglichkeit C entspricht. Dieses Blockschaltbild entspricht weitgehend demjenigen der Schaltung 23B.

In der Gedächtniseinheit 48 wird abgespeichert, welche Sorte von erlaubten Blöcken E mit zwei gleichen Bits (00, 11) jeweils als letzte aufgetreten ist. Dies bedeutet, dass für jeden abgetasteten Block 00 und 11 jeweils 00 bzw. 11 eingespeichert wird, während jeder abgetastete Block 01 den Speicherinhalt der Gedächtniseinheit 48 unverändert lässt.

Die Logikeinheit 50 erhält über die Verbindung 47 Information über die Sorte des jeweils von der Verzögerungseinheit 44 abgegebenen Blocks des Datensignals D, über die Verbindung 49 Information über die Sorte des letzten Blocks mit zwei gleichen Bits (00, 11) und über die Verbindung 56 Information, ob ein Telemetriezeichen t gesendet werden soll oder nicht. Aus diesen drei Informationen bildet sie einen jeweils zugehörigen Steuerbefehl, den sie über die Verbindung 51 an die Invertereinheit 52 abgibt.

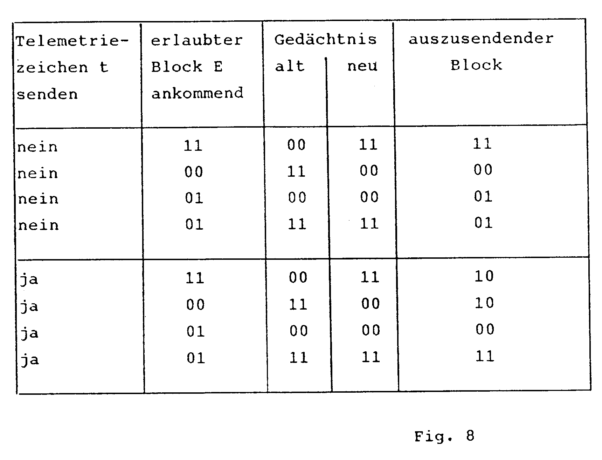

Fig. 8 zeigt die der Schaltung 23C zugeordnete Logiktabelle. In der ersten Spalte ist angegeben, ob ein Telemetriezeichen t gesendet werden soll oder nicht. Die zweite Spalte zeigt den jeweils über die Leitung 20 ankommenden Block E, die dritte Spalte den jeweils alten und die vierte Spalte den jeweils neuen Inhalt der Gedächtniseinheit 48. Die fünfte Spalte gibt schliesslich an, welche Blocksorte jeweils von der Invertereinheit 52 ausgesandt wird.

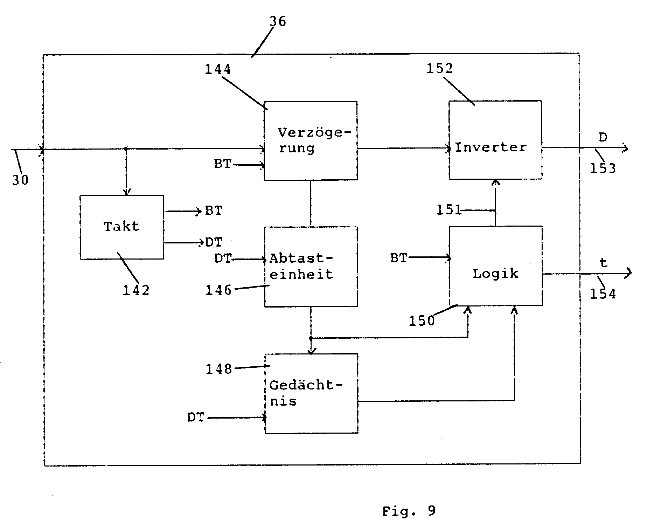

Fig. 9 zeigt das Blockschaltbild einer Telemetrieerkennungs- und Datensignalregenerator-Schaltung 36, die den genannten Möglichkeiten A, B, C, entspricht und damit das Pendant zu den Telemetrie-Einfügeschaltungen 23A, 238 und 23C bildet. Die Schaltung 36 umfasst einen Taktableiteeinheit 142, einen Verzögerungseinheit 144, eine Abtasteinheit 146, eine Invertereinheit 152, eine Gedächtniseinheit 148 und eine Logikeinheit 150.

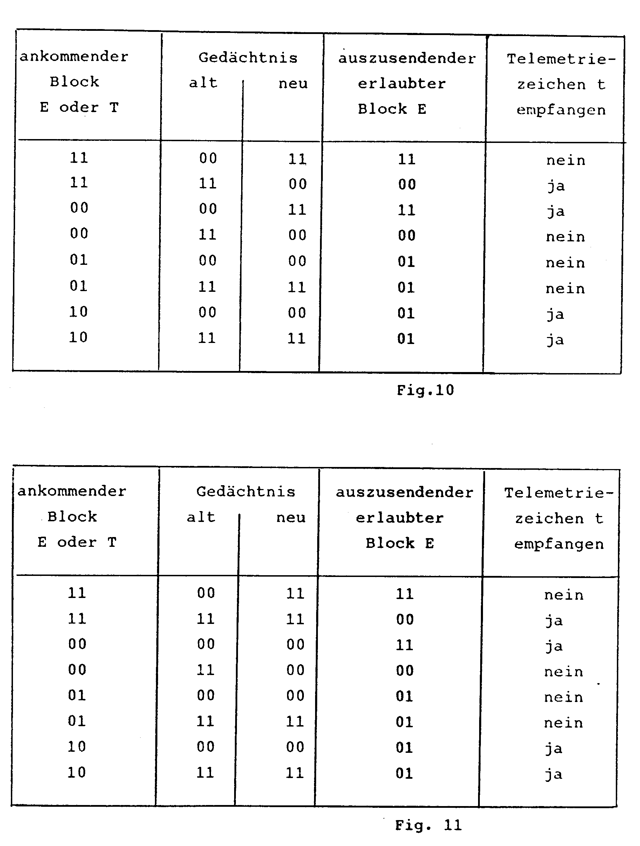

Fig. 10 zeigt eine erste Logiktabelle A, korrespondierend zur ersten Telemetrie-Einfügeschaltung 23 A. Die erste Spalte zeigt die über die Uebertragungsleitung 30 ankommenden Blöcke E und T des Datensignals D bzw. eines eventuell überlagerten Telemetriezeichens t. Die zweite Spalte zeigt den jeweils alten und die dritte Spalte den jeweils neuen Inhalt der Gedächtniseinheit 148. Die vierte Spalte gibt die Blöcke E des regenerierten Datensignals D am Ausgang 153 und die fünfte Spalte die Telemetriesignale t am Ausgang 154 der Schaltung 36 an.

Die Telemetrie-Erkennungsschaltung 36 in Kombination mit der Logiktabelle A arbeitet wie folgt: Die über die Uebertragungsleitung 30 ankommenden Blöcke werden der Verzögerungseinheit 144 zugeführt und von dieser verzögert an die Invertereinheit 152 weitergegeben. Die Taktableiteeinheit 142 regeneriert den Bit- BT und den Blocktakt DT. Die Abtasteinheit 146 tastet im Blocktakt DT die Blöcke in der Verzögerungseinheit 144 ab und gibt den jeweiligen Blöcken entsprechende Signale an die Gedächtniseinheit 148 und an die Logikeinheit 150 ab. Die Gedächtniseinheit 148 merkt sich jeweils, welche Sorte von Blöcken mit zwei gleichen Bits (00, 11) zuletzt abgetastet wurde. Die Logikeinheit 150 erkennt im Zusammenwirken mit der Gedächtniseinheit 148 alle Blöcke, die entweder verboten sind oder die die Alternierungsregel des CMI-Codes verletzen. Für jeden verbotenen Block gibt die Logikeinheit 150 ein Signal t an ihrem Ausgang 154 ab. Für Blöcke, die die Alternierungsregel verletzen, gibt sie jeweils nur für den ersten von jeweils zweien ein Signal t ab. Dies kann dadurch erreicht werden, dass im Falle einer Alternierungsverletzung nicht die aktuelle (falsche) Art der Blöcke mit zwei gleichen Bit (00, 11) sondern die jeweils andere in der Gedächtniseinheit gemerkt wird. Für beide Arten von Coderegel-Verletzungen gibt die Logikeinheit weiter jeweils einen Steuerbefehl über die Verbindung 151 an die Invertereinheit 152, durch den jeweils beide Bits des jeweiligen abgetasteten Blocks invertiert werden und der jeweils ehemalige erlaubte Block E des Datensignals wieder hergestellt wird. Das auf diese Weise vollständig regenerierte Datensignal D kann am zweiten Ausgang 153 der Telemetrie-Erkennungsschaltung 36 abgegriffen werden.

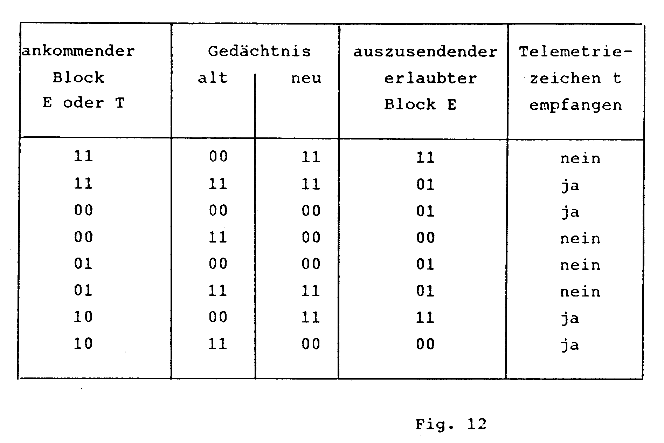

Die der Schaltung 36 und der Möglichkeit B zugeordnete Logiktabelle zeigt Fig. 11. Diese ist einfacher als diejenige, die dem Empfänger entsprechend der Möglichkeit A zugeordnet ist (Fig. 10), da für jedes Telemetriezeichen t wie beschrieben jeweils nur eine einzige Codeverletzung auftritt. Die Logiktabelle entsprechend der Möglichkeit C wird durch Fig. 12 gezeigt. Auch diese ist relativ einfach.

Der konkrete Aufbau der beschriebenen Einheiten hängt von der verwendeten Technologie und von praktischen Gesichtspunkten ab. Die Verzögerungseinheiten 44, 144 können Schieberegister sein oder aus seriell geschalteten Flipflops aufgebaut sein, wobei jedes Flipflop das Datensignal D jeweils um eine Bitlänge verzögert.

Die Abtasteinheiten 46, 146, die Gedächtniseinheiten 48, 148 und die Logikeinheiten 50, 150 setzen sich aus logischen Toren und Flipflops so zusammen, dass die der jeweiligen Logiktabelle entsprechenden Bedingungen erfüllt werden. Die Steuerbefehle auf den Verbindungen 51 bzw. 151 können dabei aus zwei Unterbefehlen bestehen, durch die seriell das erste und das zweite Bit des jeweiligen Blocks selektiv invertiert oder nichtinvertiert wird. Die Steuerbefehle können jedoch auch Blockbefehle sein, durch die bitparallel die beiden Bits des jeweiligen Blocks invertiert und/oder nichtinvertiert werden. Die Invertiereinheiten 52 und 152 bestehen aus Exklusiv-ODER-Toren (EXOR).

Der beschriebene, beispielsweise, schaltungsmässige Aufbau der Telemetrie-Einfügeschaltungen 23A, 23B, 23C und Telemetrieerkennungs- und Datensignalregenerator-Schaltungen 36 ist relativ einfach und auch für die geforderte hohe Bitrate von 140 Mbit/s mit relativ preiswerten, kommerziellen Bausteinen realisierbar.

Die Unterscheidung, ob eine von der Telemetrieerkennungs- und Datensignalregenerator-Schaltung 36 festgestellte Codeverletzung einer Störung des Bitflusses auf der Uebertragungsleitung 30 entspringt, also einen Fehler darstellt, oder ein Telemetriezeichen t darstellt, nimmt der Telemetrieempfänger 37 vor. Er nützt hierzu statistische Bedingungen und Zeitkriterien aus, worauf hier jedoch nicht näher eingegangen wird.

Insgesamt zeigt sich, dass mit Hilfe der beschriebenen Schaltungsanordnungen und Verfahren auf Uebertragungsstrecken, auf denen der CMI-Code verwendet wird, mit geringem Aufwand zusätzlich zum primären Datensignal D ein Telemetriesignal S übertragbar ist. Hierbei besteht sowohl für das Datensignal D als auch für das Telemetriesignal S volle Transparenz. Dies bedeutet, dass keinerlei Einschränkungen zeitlicher oder sonstiger Art bestehen. Insbesondere kann das Telemetriesignal S beliebig ausgebildet sein, z.B. als zwei- oder dreiwertiges Digitalsignal mit relativ frei wählbarer Taktfrequenz, solange seine Taktfrequenz deutlich unterhalb derjenigen des Datensignales D bleibt.

## Patentansprüche

1. Verfahren zum Uebertragen von digitalen Telemetriezeichen (t) über eine Uebertragungsleitung (30), über die primär Datensignale (D) in Form von erlaubten Codeblöcken (E) übertragen werden, wobei jeweils zum Uebertragen eines Telemetriezeichens (t) auf der Sendeseite ein erlaubter Block (E) einer ausgewählten Sorte durch einen verbotenen Block (V) ersetzt wird, welcher verbotene Block (V) auf der Empfangsseite als Telemetriezeichen (t) erkannt wird, und wobei ein solcher erkannter verbotener Block (V) zur Wiederherstellung des Datensignals (D) durch einen erlaubten Block (E) der ausgewählten Sorte rückersetzt wird,
dadurch gekennzeichnet,
- dass die Codeblöcke entsprechend dem CMI-Code gebildet und verwendet werden, und
- dass den drei Sorten von erlaubten Blöcken (E) des CMI-Codes drei Sorten von Telemetrieblöcken (T) so zugeordnet werden,
. dass jederzeit und jeder erlaubte Block (E) durch einen Telemetrieblock (T) ersetzbar ist,
. dass jeder Telemetrieblock (T) eine Regel des CMI-Codes verletzt,
. und dass jeder Telemetrieblock (T) durch einen erlaubten Block (E) jeweils derjenigen Sorte rückersetzbar ist, der der ursprünglich ersetze erlaubte Block (E) angehörte.

2. Verfahren nach Anspruch 1,
dadurch gekennzeichnet,
dass jeder Sorte der erlaubten Blöcke (E) des CMI-Codes jeweils diejenige Sorte von Telemetrieblöcken (T) zugeordnet wird, deren Blockbits gegenüber den Bits des jeweils zugeordneten erlaubten Blocks (E) beide invertiert sind.

3. Verfahren nach Anspruch 2,
dadurch gekennzeichnet,
dass, nachfolgend auf jeden Telemetrieblock (T) mit zwei gleichen Bits, alle erlaubten Blöcke (E) mit zwei gleichen Bits invertiert werden.

4. Verfahren nach Anspruch 1,
dadurch gekennzeichnet,
dass den beiden Sorten von erlaubten Blöcken (E) mit zwei gleichen Bits (00, 11) als Sorte der Telemetrieblöcke (T) die eine Sorte der verbotenen Blöcken (V, 10) des CMI-Codes zugeordnet wird, und
dass der einen Sorte von erlaubten Blöcken (E) mit zwei ungleichen Bits (01), die beiden Sorten von Telemetrieblöcken (T) mit zwei gleichen Bits (00, 11) zugeordnet werden,
derart, dass jeder solche Telemetrieblock (T) jeweils die Alternierungsregel des CMI-Codes verletzt.

5. Vorrichtung zum Uebertragen von digitalen Telemetriezeichen (t) über eine Uebertragungsleitung (30), über die primär Datensignale (D) in Form von Codeblöcken übertragen werden,
mit einer Telemetrie-Einfügeschaltung (23A, 23B, 23C) auf der Sendeseite, die jeweils auf Befehl eines Telemetriesenders (22) einen erlaubten Block (E) einer ausgewählten Sorte durch einen verbotenen Block (V) ersetzt und diesen auf die Uebertragungsleitung (30) aussendet,
und mit einer Telemetrieerkennungs- und Datensignalregenerator-Schaltung (36) auf der Empfangsseite, die die verbotenen Blöcke (V) erkennt, die für jeden verbotenen Block (V) ein Signal (t) an einen Telemetrieempfänger (37) abgibt und die die verbotenen Blöcke (V) rückersetzt durch einen erlaubten Block (E) der ausgewählten Sorte,
dadurch gekennzeichnet,
- dass die Datensignale (D) durch erlaubte Blöcke (E) übertragen werden, die entsprechend dem CMI-Code gebildet sind,
- dass die Telemetrie-Einfügeschaltung (23) ausgebildet ist zum jederzeitigen Ersetzen jedes erlaubten Blockes (E) durch einen Telemetrieblock (T), wobei jeder Telemetrieblock (T) eine Regel des CMI-Codes verletzt, und
- dass die Telemetrieerkennungs- und Datensignalregenerator-Schaltung (36) ausgebildet ist zum Erkennen jedes Telemetrieblockes (T) und zum Rückersetzen jedes Telemetrieblockes (T) durch einen solchen erlaubten Block (E), der jeweils demjenigen Block entspricht, der in der Telemetrie-Einfügeschaltung (23) ersetzt worden war.

6. Vorrichtung nach Anspruch 5,
dadurch gekennzeichnet,
dass die Telemnetrie-Einfügeschaltung (23A) eine Taktableiteeinheit (42), eine Invertereinheit (52) und eine Telemetriepulseinheit (54) umfasst.

7. Vorrichtung nach Anspruch 5,
dadurch gekennzeichnet,
dass die Telemetrie-Einfügeschaltung (23B, 23C) eine Taktableiteeinheit (42), eine Verzögerungseinheit (44), eine Abtasteinheit (46), eine Gedächtniseinheit (48), eine Logikeinheit (50), eine Invertereinheit (52) und eine Telemetriepulseinheit (54) umfasst.

8. Vorrichtung nach Anspruch 5,
dadurch gekennzeichnet,
dass die Telemetrieerkennungs- und Datensignalregenerator-Schaltung (36) eine Taktableiteeinheit (142), eine Verzögerungseinheit (144), eine Abtasteinheit (146), eine Gedächtniseinheit (148), eine Logikeinheit (150) und eine Invertereinheit (152) umfasst.

## Claims

1. A method for transmitting digital telemetry characters (t) through a transmission line (30), over which primary data signals (D) in form of permitted code blocks (E) are transmitted, whereby a permitted block (E) of a selected type is replaced by a prohibited block (V) for transmitting a telemetry character (t) on the transmission side, which prohibited block (V) is recognized on the receiving side as telemetry character (t) and whereby such a recognized prohibited block (V) is re-replaced by a permitted block (E) of the selected type for reproducing the data signal (D), characterized in
- that the code blocks are generated and used in accordance with the CMI code, and
- that the three types of permitted blocks (E) of the CMI codes are allocated to three types of telemetry blocks (T) in such a way
* that at any time every permitted block (E) is replaceable by a telemetry block (T);
* that every telemetry block (T) violates a CMI code regulation;
* that every telemetry block (T) is re-replaceable by a permitted block (E) of the respective type which belonged to the originally replaced block (E).

2. A method as claimed in claim 1, characterized in that the type of telemetry blocks (T) is allocated to every type of permitted blocks (E) of the CMI code whose block bits are both inverted with respect to the respectively allocated permitted blocks (E).

3. A method as claimed in claim 2, characterized in that all permitted blocks (E) with two similar bits are inverted subsequently to every telemetry block (T) with two similar bits.

4. A method as claimed in claim 1, characterized in that the one type of prohibited blocks (V, 10) of the CMI code is allocated to the two kinds of permitted blocks (E) with two similar bits (00, 11) as type of telemetry blocks (T) and that the two types of telemetry blocks (T) with two similar bits (00, 11) are allocated to the one type of permitted blocks (E) with two dissimilar bits (01) in such a way that every such telemetry block (T) violates the alternating regulation of the CMI code.

5. An apparatus for the transmission of digital telemetry characters (T) through a transmission line (30), over which the primary data signals (D) are transmitted in form of code blocks, comprising a telemetry insertion circuit (23A, 23B, 23C) on the transmission side which replaces a permitted block (E) of a selected type by a prohibited block (V) on instruction by the telemetry transmitter (22) and transmits it onto the transmission line (30), and further comprising a telemetry recognition and data signal regenerator circuit (36) on the receiving side, which circuit recognizes the prohibited blocks (V) and issues a signal (t) to a telemetry receiver (37) for every prohibited block (V) and re-replaces the prohibited blocks (V) by a permitted block (E) of the selected type, characterized in
- that the data signals (D) are transmitted through permitted blocks (E) which are generated in accordance with the CMI code,
- that the telemetry insertion circuit (23) is arranged such that every permitted block (E) can be replaced by a telemetry block (T) at any time, with every telemetry block (T) violating a regulation of the CMI code, and
- that the telemetry recognition and data signal regenerator circuit (36) is arranged for recognizing every telemetry block (T) and for re-replacing every telemetry block (T) by such a permitted block (E) which is equivalent to the block which had been replaced in the telemetry insertion circuit (23).

6. An apparatus as claimed in claim 5, characterized in that the telemetry insertion circuit (23A) comprises a timing extraction unit (42), an inverter unit (52) and a telemetry pulse unit (54).

7. An apparatus as claimed in claim 5, characterized in that the telemetry insertion circuit (23B, 23C) comprises a timing extraction unit (42), a delay unit (44), a scanning unit (46), a memory unit (48), a logic unit (50) and a telemetry pulse unit (54).

8. An apparatus as claimed in claim 5, characterized in that the telemetry recognition and data signal regenerator circuit (36) comprises a timing extraction unit (142), a delay unit (144), a scanning unit (146), a memory unit (148), a logic unit (150) and an inverter unit (152).

## Revendications

1. Procédé pour la transmission de signaux télémétriques numériques (t) par le biais d'une voie de transmission (30) utilisée essentiellement pour transmettre des signaux de données (D) sous forme de blocs codés autorisés (E), un bloc autorisé (E) d'une catégorie sélectionnée étant pour chaque transmission d'un signal télémétrique remplacé côté transmission par un bloc non autorisé (V), ce bloc non autorisé (V) étant identifié côté réception comme signal télémétrique (t), et un tel bloc non autorisé identifié (V) étant remplacé de nouveau par un bloc autorisé (E) de la catégorie sélectionnée afin de rétablir le signal de donnée (D), caractérisé par le fait,
- que les blocs codés sont constitués et utilisés en fonction du code CMI et
- qu'aux trois catégories de blocs autorisés (E) du code CMI correspondent trois catégories de blocs de télémétrie (T) de telle sorte que
. à chaque instant, chaque bloc autorisé (E) puisse être remplacé par un bloc télémétrique (T),
. chaque bloc télémétrique (T) contrevienne à une règle du code CMI,
. chaque bloc télémétrique (T) soit remplaçable de nouveau par un bloc autorisé (E) de la catégorie à laquelle appartenait le bloc autorisé (E) remplacé initialement.

2. Procédé selon revendication 1,
caractérisé par le fait
qu'à chaque catégorie de blocs autorisés (E) du code CMI est attribuée la catégorie correspondante de blocs télémétriques (T) dont les bits du bloc sont inversés par rapport aux bits du bloc autorisé (E) attribué respectivement.

3. Procédé selon revendication 2,
caractérisé par le fait
que suite à chaque bloc télémétrique (T) formé par deux bits identiques, les blocs autorisés (E) comportant deux bits identiques sont tous inversés.

4. Procédé selon revendication 1,
caractérisé par le fait
qu'aux deux catégories de blocs autorisés (E) comportant deux bits identiques (00,11) est attribuée, en tant que catégorie de bloc télémétrique (T) la catégorie de blocs non autorisés (V, 10) du code CMI, et
qu'à la catégorie de blocs autorisés (E) comportant deux bits non identiques (01) sont attribués les deux catégories de blocs télémétriques (T) comportant deux bits identiques (00,11), de manière à ce que chaque bloc télémétrique (T) ainsi attribué contrevienne chaque fois à la règle d'alternance du code CMI.

5. Dispositif destiné à la transmission de signaux télémétriques (t) numériques par le biais d'une voie de transmission (30) utilisée essentiellement pour transmettre des signaux de données (D) sous forme de blocs codés,
doté, côté transmission, d'un circuit d'insertion télémétrique (23A, 23B, 23C) qui, à chaque commande émanant d'un émetteur télémétrique (22), substitue à un bloc autorisé (E) d'une catégorie sélectionnée un bloc non autorisé (V) et émet ce dernier sur la voie de transmission (30),
et doté, côté réception, d'un circuit d'identification télémétrique et de rétablissement des signaux de données (36) capable d'identifier les blocs non autorisés (V), qui transmet pour chaque bloc non autorisé (V) un signal (t) à un récepteur télémétrique (37) et qui resubstitue aux blocs non autorisés (V) un bloc autorisé (E) de la catégorie sélectionnée,
caractérisé par le fait
- que les signaux de donnée (D) sont transmis par des blocs autorisés (E) constitués conformément au code CMI,
- que le circuit d'insertion télémétrique (23) est réalisé de façon à pouvoir substituer, à chaque instant, à chaque bloc autorisé (E) un bloc télémétrique (T), chaque bloc télémétrique (T) contrevenant à une règle du code CMI, et
- que le circuit d'identification télémétrique et de rétablissement des signaux de données (36) est réalisé de façon à pouvoir identifier chaque bloc télémétrique (T) et à resubstituer à chaque bloc télémétrique (T) un bloc autorisé (E) qui correspond chaque fois au bloc remplacé initialement dans le circuit d'insertion télémétrique (23).

6. Dispositif selon revendication 5,
caractérisé par le fait
que le circuit d'insertion télémétrique (23A) comprend une unité de dérivation de cycle (42), une unité d'inversion (52) et une unité d'impulsion télémétrique (54).

7. Dispositif selon revendication 5,
caractérisé par le fait
que le circuit d'insertion télémétrique (23B, 23C) comprend une unité de dérivation de cycle (42), une unité de temporisation (44), une unité d'échantillonnage (46), une unité mémoire (48), une unité logique (50), une unité d'inversion (52) et une unité d'impulsion télémétrique (54).

8. Dispositif selon revendication 5,
caractérisé par le fait
que le circuit d'identification télémétrique et de rétablissement de signaux de données (36) comprend une unité de dérivation de cycle (142), une unité de temporisation (144), une unité d'échantillonnage (146), une unité mémoire (148), une unité logique (150) et une unité d'inversion (152).
